# EUROPÄISCHE PATENTSCHRIFT

(11) **EP 1 205 233 B1**
(45) Veröffentlichungstag und Bekanntmachung des Hinweises auf die Patenterteilung: **11.06.2003**
(21) Anmeldenummer: 00124093.6
(22) Anmeldetag: 07.11.2000
(51) Int. Cl.: B01D 53/06, B01D 53/68, B01D 53/74, B01D 53/08

(54) **Verfahren zur Rauchgasreinigung**
Process for flue gas purification
Procédé pour la purification de gaz de fumée

(43) Veröffentlichungstag der Anmeldung: 15.05.2002
(73) Patentinhaber: Hellmich, Friedrich, 32278 Kirchlengern (DE)
(72) Erfinder: Hellmich, Friedrich, 32278 Kirchlengern (DE)
(74) Vertreter: Specht, Peter, Dipl.-Phys.

(56) Entgegenhaltungen:
- EP-A- 0 293 688
- EP-A- 0 463 367
- RU-C- 2 108 138
- US-A- 4 555 391
- US-A- 4 590 049
- US-A- 4 782 772

## Beschreibung

Die Erfindung betrifft ein Verfahren zur Rauchgasreinigung in Ziegelein mittels eines zumindest teilweise mit einem Sorptionsmaterial gefüllten Sorptionsbehälters-ein Einbindungs- und Vermischungsturm -, der das Sorptionsmaterial von oben nach unten oder von unten nach oben durchtritt, wobei es vom Rauchgas durchströmt wird und bei dem eine bestimmte Menge des aus dem Sorptionsbehälter abgezogenen und teilgesättigten Sorptionsmaterial mit einem ungesättigten Sorptionsmaterial gemischt und in den Sorptionsbehälter rückgeführt wird.

Die EP-A-0293688 zeigt ein Verfahren mit den Merkmalen "a" und "b" des Anspruches 1, wobei das Sorptionsmaterial abgekühlt wird. Analoges gilt für die EP-A-0463367. In den Rauchgasstrom wird dabei Wasser eingesprüht.

Das in Rede stehende Verfahren ist zur Reinigung von Rauchgasen geeignet, welche in Industriebetrieben, beispielsweise in Ziegeleien, anfallen. Die Rauchgasreinigung ist notwendig, um die gasförmigen Verunreinigungen, beispielsweise Fluor-Verunreinigungen, zu absorbieren.

Eine nach dem Verfahren arbeitende Anlage ist so ausgelegt, dass ein Teil des Sorptionsmaterials nach dem Abziehen aus dem Sorptionsbehälter entsorgt wird und eine bestimmte Menge des zum Teil gesättigten Sorptionsmaterials, welches noch reaktionsfähig ist, mit ungesättigtem Sorptionsmaterial, das heißt, noch nicht benutztem Sorptionsmaterial, gemischt wird. Als Sorptionsmaterial kommt normalerweise ein kalkhaltiges Material, beispielsweise Kalksplit in Frage, welches noch mit Wasser angereichert wird. Das Mischen des teilgesättigten Sorptionsmaterials mit dem ungesättigten Sorptionsmaterial ist problematisch, da die Temperatur des teilweise gesättigten Sorptionsmaterials relativ hoch ist, beispielsweise bei ca. 200 °C liegt. Die Reaktionsfähigkeit des Sorptionsmaterials nimmt außerdem bei höheren Temperaturen ab.

Die US-A-4782772 zeigt die Merkmale "a" und "b" des Anspruches 1. Das Sorptionsmaterial wird dabei abgekühlt und einer Wasserbehandlung unterzogen, wobei eine Hydratisierung in einem Reaktionsgefäß erfolgt.

Der Erfindung liegt die Aufgabe zugrunde, ein Verfahren der eingangs näher beschriebenen Art so zu gestalten, dass die Reaktionsfähigkeit des Gemisches erhöht wird und dass der Mischvorgang problemlos durchgeführt werden kann.

Die gestellte Aufgabe wird durch den Gegenstand des Anspruchs 1 gelöst.

Durch das Abkühlen wird die Reaktionsfähigkeit des Sorptionsmaterials wesentlich erhöht, so dass eine nach dem erfindungsgemäßen Verfahren arbeitende Anlage wirtschaftlicher betrieben werden kann. Es findet außerdem eine Schockverdampfung der in dem Sorptionsmaterial enthaltenen Feuchtigkeit im Einbindungs- und Vermischungsturm statt. Ein Kühlvorgang lässt sich mit einem relativ geringen Aufwand durchführen, so dass der konstruktive Aufwand für eine Anlage nur unwesentlich erhöht werden muss. Ein weiterer Vorteil liegt noch darin, dass bereits sich im Betrieb befindende Anlagen nachgerüstet werden können.

Eine einfachste Form der Kühlung ergibt sich, wenn als Kühlmittel eine Flüssigkeit, insbesondere Wasser, verwendet wird. ES ist vorgesehen, dass das teilgesättigte Sorptionsmaterial auf ein Drittel bis ein Viertel der vorherigen Temperatur abgekühlt wird. Wenn die Temperatur des teilgesättigten Sorptionsmaterials nach dem Abziehen aus dem Sorptionsbehälter beispielsweise ca. 200°C beträgt, tritt es mit einer Temperatur von 50°C - 60°C aus dem Kühlaggregat aus. Da im Normalfall eine kleinere Menge von ungesättigtem Sorptionsmaterial zugemischt wird, liegt die Temperatur bei der Rückführung in den Einbindungs- und Vermischungsturm bei 40°C-50°C.

Da durch die Schockverdampfung Feuchtigkeit entweicht, ist vorgesehen, dass während des Mischvorganges Feuchtigkeit zugeschlagen wird.

Die Erfindung wird anhand des beiliegenden Fließbildes noch näher erläutert.

Es zeigt:

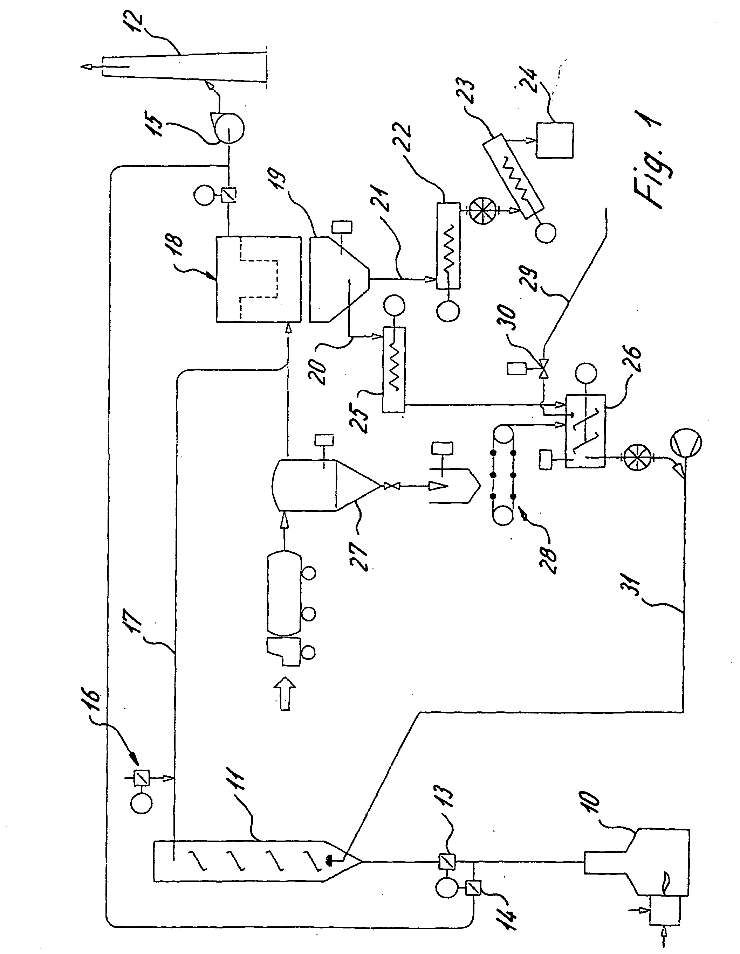

- Figur 1: den Aufbau einer nach dem erfindungsgemäßen Verfahren arbeitendenden Anlage als Fließbild.

Der Rauchgaserzeuger ist im dargestellten Ausführungsbeispiel ein Brennofen 10, der in einer Ziegelei zum Brennen der Steine eingesetzt wird.

Die Rauchgase gelangen entweder in einen Einbindungs- und Vermischungsturm 11 oder direkt in einen Kamin 12 oder einen Schornstein. Dieses kann durch zwei gesteuerte Umschaltklappen 13, 14 geregelt werden, wobei die Umschaltklappe 13 in der direkten Verbindung zwischen dem Brennofen 10 und dem Einbindungs- und Vermischungsturm 11 montiert ist und die andere Umschaltklappe 14 in der zum Kamin führenden Leitung installiert ist.

Die Rauchgase werden unabhängig von ihrem Strömungsverlauf durch einen Rauchgasventilator 15 in den Kamin 12 geleitet.

Nachfolgend wird das Verfahren beschrieben, wenn die vom Brennofen 10 ausgestoßenen Rauchgase in den Einbindungs- und Vermischungsturm 11 geleitet werden. Dieser ist mit einem Sorptionsmaterial, beispielsweise Kalksplitt, gefüllt, welches den Einbindungs- und Vermischungsturm 11 von unten nach oben durchtritt. In nicht näher dargestellter Weise wird das Sorptionsmaterial von den Rauchgasen durchströmt. Dieser werden mit einer Temperatur von ca. 250°C vom Brennofen 10 ausgestoßen und verlassen bei einer Temperatur von ca. 210°C den Einbindungs- und Vermischungsturm 11. Es kann erforderlich werden, dass unmittelbar nach dem Austritt aus dem Einbindungs- und Vermischungsturm 11 über einen Stutzen 16 Wasser zugeschlagen wird.

Über eine Rauchgasleitung 17 gelangen die Rauchgase in eine nicht näher erläuterte Filteranlage 18 und von dort aus in den Kamin 12.

Das aus dem Einbindungs- und Vermischungsturm 11 über die Filteranlage 18 abgezogene Sorptionsmaterial gelangt bei einer Temperatur von ca. 200°C in einem Sammelbehälter 19. Dort erfolgt eine Abtrennung von Sorptionsmaterial, welches entsorgt wird. Das nicht abgetrennte Sorptionsmaterial ist durch den Pfeil 20 und das abgetrennte Sorptionsmaterial durch den Pfeil 21 symbolisch dargestellt.

Das gesättigte abgetrennte Sorptionsmaterial wird mittels Schneckenförderer 22 und 23 in einen Behälter oder einen Großsack 24 gefördert, um es zu entsorgen. Die Temperatur des nicht abgetrennten Sorptionsmaterials beträgt nach der Trennung 200°C. Es gelangt zunächst in ein Kühlaggregat 25, welches vorzugsweise mit einer Flüssigkeit, insbesondere Wasser, betrieben wird.

Das Sorptionsmaterial wird auf eine Temperatur von 50°C - 60°C abgekühlt und gelangt dann in eine Befeuchtungs- und Mischtrommel 26. Hier wird es mit noch nicht benutztem, ungesättigtem Sorptionsmaterial vermischt, welches aus einem Silo 27 abgezogen und mittels einer nicht näher erläuterten Dosiereinrichtung 28 in die Befeuchtungs- und Mischtrommel 26 transportiert wird. Über eine Rohr- oder Schlauchleitung 29 wird der Befeuchtungs- und Mischtrommel 26 Wasser in definierte Menge zugeschlagen. Dazu ist in der Rohr- oder Schlauchleitung 29 ein Ventil 30 montiert.

Die Erfindung ist nicht auf das zuvor beschriebene Verfahren beschränkt. Wesentlich ist, dass das teilgesättigte Sorptionsmaterial vor dem Mischen mit dem ungesättigten, noch nicht benutzten Sorptionsmaterial beträchtlich abgekühlt wird.
Das Bezugszeichen 31 zeigt die Rückführung in den Einbindungs- und Vermischungsturm.

## Patentansprüche

1. Verfahren zur Rauchgasreinigung beispielsweise in Ziegelein
a) mittels eines zumindest teilweise mit einem Sorptionsmaterial gefüllten Sorptionsbehälters (11) - ein Einbindungs- und Vermischungsturm -, den das Sorptionsmaterial von oben nach unten oder von unten nach oben durchtritt,
b) wobei es vom Rauchgas durchströmt wird und bei dem eine bestimmte Menge des aus dem Einbindungs- und Vermischungsturm (11) über eine Filteranlage (18) abgezogenen und teilgesättigten Sorptionsmaterials mit einem ungesättigten Sorptionsmaterial gemischt und in den Einbindungs- und Vermischungsturm (11) rückgeführt wird,
c) wobei das teilgesättigte Sorptionsmaterial nach der Filteranlage und vor dem Mischen mit dem ungesättigten Sorptionsmaterial mittels eines Kühlaggregates (25) abgekühlt wird
d) wobei das teilgesättigte Sorptionsmaterials auf ein Drittel bis ein Viertel der vorherigen Temperatur abgekühlt wird,
e) wobei das abgekühlte Sorptionsmaterial in eine Befeuchtungsund Mischtrommel (26) gelangt, wo es mit dem noch nicht benutztem, ungesättigten Sorptionsmaterial vermischt wird und wobei der Befeuchtungs- und Mischtrommel (26) Wasser zugeschlagen wird.

2. Verfahren nach Anspruch 1, **dadurch gekennzeichnet, daß** das teilgesättigte Sorptionsmaterial mittels eines Flüssigkeitskühlers (25) abgekühlt wird.

## Claims

1. Method for the purification of smoke gas, for example in brickyards
a) by means of a sorption vessel (11) - a retaining and mixing tower - which is filled at least partially with a sorption material and through which the sorption material passes from above downwards or from below upwards,
b) the smoke gas flowing through the said sorption material, and in which a specific quantity of the partially saturated sorption material drawn off from the retaining and mixing tower (11) via a filter system (18) is mixed with an unsaturated sorption material and is recirculated into the retaining and mixing tower (11),
c) the partially saturated sorption material being cooled, downstream of the filter system and before being mixed with the unsaturated sorption material, by means of a cooling assembly (25),
d) the partially saturated sorption material being cooled to one third to one quarter of the previous temperature,
e) the cooled sorption material passing into a moistening and mixing drum (26), where it is mixed with the unsaturated sorption material not yet used, and water-being added to the moistening and mixing drum (26).

2. Method according to Claim 1, **characterized in that** the partially saturated sorption material is cooled by means of a liquid cooler (25).

## Revendications

1. Procédé d'épuration de fumées, par exemple dans des briqueteries, dans lequel
a) au moyen d'un récipient de sorption (11) - une tour de liaison et de malaxage - rempli au moins en partie d'un matériau de sorption, qui est traversé par le matériau de sorption de haut en bas ou de bas en haut,
b) lequel est traversé par les fumées et dans lequel une quantité déterminée du matériau de sorption extrait de la tour de liaison et de malaxage (11) à travers une installation de filtrage (18), et en partie saturé, est mélangé à un matériau de sorption non saturé et est recyclé dans la tour de liaison et de malaxage (11),
c) le matériau de sorption (1) en partie saturé est refroidi, après l'installation de filtrage et avant d'être mélangé au matériau de sorption non saturé au moyen d'un groupe de refroidissement (25),
d) le matériau de sorption en partie saturé étant refroidi jusqu'à un tiers à un quart de la température précédente,
e) le matériau de sorption refroidi parvenant dans un tambour d'humidification et de malaxage (26) où il est mélangé au matériau de sorption non saturé, encore non utilisé, et de l'eau étant ajoutée au tambour d'humidification et de malaxage (26).

2. Procédé selon la revendication 1, **caractérisé en ce que** le matériau de sorption en partie saturé est refroidi au moyen d'un refroidisseur à liquide (25).
